# EUROPEAN PATENT SPECIFICATION

(11) **EP 0 530 776 B1**
(45) Date of publication and mention of the grant of the patent: **17.03.1999**
(21) Application number: 92114998.5
(22) Date of filing: 02.09.1992
(51) Int. Cl.: H04L 7/033

(54) **Timing recovering apparatus**
Taktwiedergewinnungsvorrichtung
Dispositif de récupération d'horloge

(30) Priority: 03.09.1991 JP 222620/91
(43) Date of publication of application: 10.03.1993
(73) Proprietor: MATSUSHITA ELECTRIC INDUSTRIAL CO., LTD., Kadoma-shi, Osaka-fu, 571 (JP)
(72) Inventor: Shimotashiro, Masafumi, Katano-shi, Osaka (JP); Hashimoto, Kiyokazu, Matsubara-shi, Osaka (JP); Higashida, Yoshio, Ibaraki-shi, Osaka (JP); Hayashi, Koichi, Takamatsu-shi, Kagawa-ken (JP)
(74) Representative: Pellmann, Hans-Bernd, Dipl.-Ing.

(56) References cited:
- EP-A- 0 365 257
- ELECTRONICOM '85 vol. 1, 6 October 1985, TORONTO pages 178 - 180 R. GANGOPADHYAY ET AL 'clock recovery of distorted NRZ signal in an optical receiver employing avalanche photodetector'
- COMSAT TECHNICAL REVIEW vol. 15, no. 2B, 1985, WASHINGTON US pages 423 - 432 C.J. WOLEJSZA ET AL '120-Mbit/s TDMA modem and FEC codec performance'
- CUSTOM ITEGRATED CIRCUIT CONFERENCE no. 7.2, May 1989, SAN DIEGO, CALIFORNIA pages 712 - 724 R.S. CO ET AL 'a differential PLL architecture for high speed data recovery'

## Description

This invention relates to a timing recovering apparatus for recovering timing of received data signal, and particularly relates to a timing recovering apparatus used in a digital magnetic reproducing apparatus for reproducing a video signal or a sound signal.

A timing recovering apparatus for recovering timing of received data signal used in a digital magnetic reproducing apparatus for reproducing a video signal or a sound signal after a/d conversion is known. Such timing recovering apparatus is used for recovering timing of interleaved NRZI (I-NRZI) coded digital data signal. In the timing recovering apparatus, the reproduced or transmitted interleaved NRZI coded digital data signal is supplied to an equalizer circuit for frequency-compensating to produce a data signal having partial response waveform, hereinafter referred to as PR (1, 0,-1). The equalized data signal shows three-valued eye pattern, that is, it shows three levels (1, 0, and -1), that is, it is represented by three-valued notation. The equalized data signal is compared with two different reference levels by comparators. A logic circuit detects change in logic level of outputs of the comparators and a clock generation circuit produces a reproduced clock signal with timing of the receive data signal recovered.

An automatic slice apparatus for detecting the data signal by comparing the data signal with reference levels controlled in accordance with a magnitude of the output of the equalizer is known. It is used in a digital magnetic recording apparatus and a digital magnetic reproducing apparatus. Such automatic slice apparatus detects the received digital data signal by comparing such that the reference level is controlled to the center level of the eye pattern of the received data signal to effect accurate comparison. Such comparison reduces fluctuation in amplitude of received digital data signal. Such fluctuation may be developed at a magnetic head for reading a recorded data signal. Such automatic slice apparatus can used together with the timing recovering circuit mentioned above. In this case, the automatic slice circuit generates two different reference levels to comparing the equalized data signal having partial response waveform.

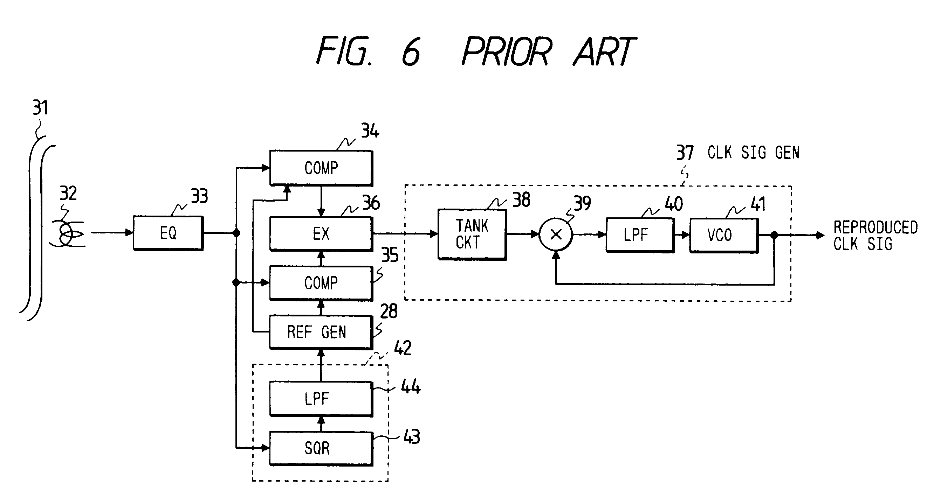

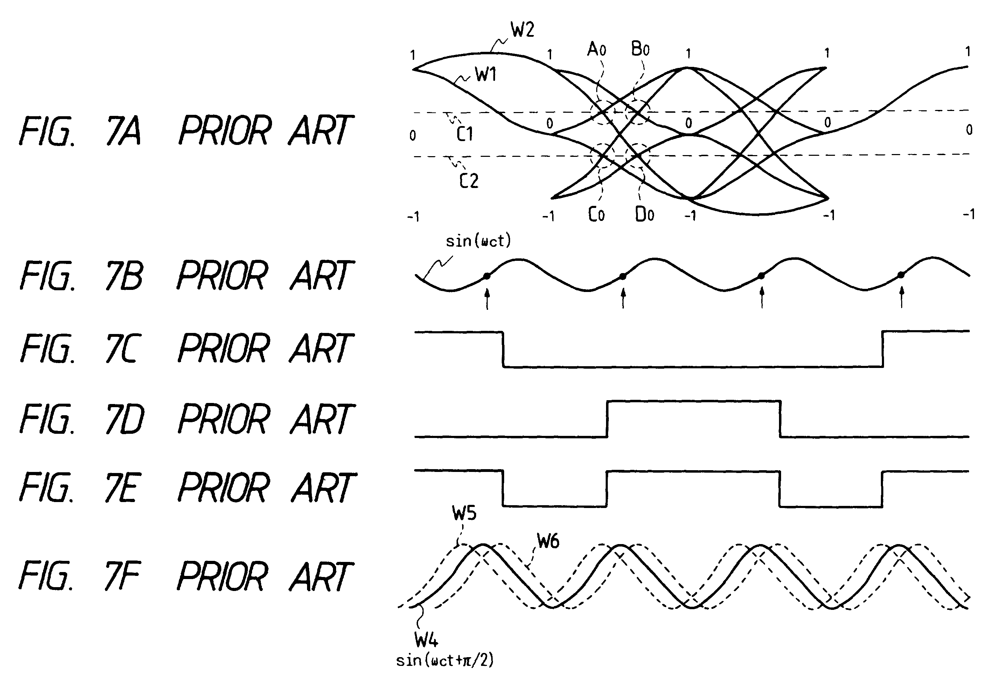

Fig. 6 is a block diagram of a prior art timing recovering apparatus having a prior art automatic slice circuit. Figs. 7A to 7F show waveforms for explaining a prior art timing recovering apparatus.

A digital data signal reproduced from a magnetic recording medium 31 by a magnetic head 32 is applied to an equalizing circuit 33 for frequency-compensating the received data signal to produce a data signal having partial response (PR) waveform. The equalized data signal shows three-valued eye pattern. The equalized data signal is compared by comparing circuits 34 and 35. Comparing circuits 34 and 35 have different reference levels C1 and C2 shown in Fig. 7A to discriminate the equalized data signal into three level ranges with their binary outputs. The comparing circuit 35 having the reference level C2 outputs an inverted output such that a level of -1 is output as 1. The binary outputs from the comparator 34 and 35 are input to an Exclusive OR circuit 36 for effecting Exclusive OR operation.

A clock signal generation circuit 37 for detecting bit phase, comprising: a tank circuit 38, multiplier 39, low-pass filter (LPF) 40, and a voltage controlled oscillator (VCO) 41. In response to edge portions of the binary output of the Exclusive OR 36, the tank circuit 38 generates a clock signal whose frequency corresponds to the reproduced clock signal of the timing recovering circuit. The output signal of the tank circuit 38 is applied to a phase locked loop (PLL) circuit including the multiplier 39, low-pass filter 40 and the voltage controlled oscillator 41. Therefore, the phase locked loop circuit outputs the clock signal with timing recovered from the received digital data signal.

In this prior art timing recovering circuit, a phase of the output of the tank circuit 38 may change in accordance with pattern of data. Fig. 7A shows eye pattern of the output of the equalizer 36, the eye pattern being to be discriminated into three values. In Fig. 7A, the output of the equalizer 36 is normally discriminated at timings A0, B0, C0, and D0 with the same possibility substantially, so that the the tank circuit 38 generates a sine signal as shown in Fig. 7B with phases of respective waves of the sine signal (ω ₒt) averaged.

However, when the data signal indicative of a specific data pattern, that is, a waveform W1 represented by (1, 0, -1, 0, 1) of three-valued notation, is input repeatedly to the prior art timing recovering circuit, the output of the Exclusive OR circuit 36 outputs a signal shown in Fig. 7E because the output of the comparing circuit 34 shows a waveform shown in Fig. 7C and the output of the comparing circuit 35 shows a waveform shown in Fig. 7D.

Accordingly, the tank circuit 38 would output a signal represented by waveform W5 in response to falling edges of the output of the Exclusive OR circuit 36. On the other hand, the tank circuit 38 would output a signal represented by waveform W6 in response to rising edges of the output of the Exclusive OR circuit 36. In fact, due to averaging, the tank circuit 38 outputs a signal represented by a waveform W4, that is, a signal of sin (ω ₒt+ π /2). This signal represented by the waveform W4 is different in phase by π /2 from the waveform shown in Fig. 7B, so that bit slip occurs. That is, bias of data pattern causes phase shift of the reproduced clock signal, so that there is a problem that bit synchronizing cannot be obtained accurately by this prior art timing recovering circuit.

In Fig. 6, an automatic slice circuit 42 controls a reference level for the comparing circuits 34 and 35 in accordance with a detected amplitude of the output of the equalizer 33. The output of the equalizer 33 is applied to a squaring circuit 43 for detecting an absolute amplitude of the output of the equalizer 33 which is sent to a low-pass filter 44 for removing high frequency component to produce the reference level. The reference level is sent to a reference signal generation circuit 28 for generating the reference levels C1 and C2 for the comparing circuits 34 and 35. Comparing circuits 34 and 35 discriminate the received data signal into three-valued notation from the reference level.

This automatic slice circuit 42 causes the comparing circuits 34 and 35 to discriminating the received data signal into three-valued notation with variation in amplitude of the output of the equalizer 33 caused by the magnetic head 32.

However, because the pass band of the received data signal is limited to obtain partial response (1, 0, -1) in this system, bias of data pattern causes variation in amplitude at the output of the equalizer 33. For example, a data pattern represented by a waveform W2 indicated by three-value notation (1, 1, -1, -1) shown in Fig. 7A shows such variation.

Therefore, there is a problem that the reference level for comparing is inaccurate due to bias of data pattern of the received data signal in this prior art automatic slice circuit 42. Moreover, there is a further problem that such prior art automatic slice circuit 42 is adversely affected by external noises because such prior art automatic slice circuit has an open-loop structure, or feedforward structure.

Furthermore, document EP-A-0 365 257 discloses a phase correcting clock circuit for accurately recovering binary data. To be precise, in this prior art arrangement an analog signal which has been read from a magnetic track and which is equalized and gain controlled is applied to threshold detecting means. Then the signals output by the threshold detecting means are fed to edge detectors, respectively, outputting a pulse whenever the fed signal undergoes an edge transition. Next, the pulse signals are supplied to phase detectors, respectively, detecting a phase error. This phase error is supplied to current source charge pump means providing output currents which are a function of the magnitude of the phase error signals output by the phase detectors, respectively. The phase error current signal output by the current source charge pump means is applied to loop filter means averaging or integrating the phase error information over a significant time period.

The present invention has been developed in order to remove the above-described drawbacks inherent to the conventional timing recovering apparatus.

According to the present invention this object is accomplished by a timing recovering apparatus as defined in claim 1.

The object and features of the present invention will become more readily apparent from the following detailed description taken in conjunction with the accompanying drawings in which:
Fig. 1 is a block diagram of an explanatory example of this invention of timing recovering circuit;
Figs. 2A to 2F shows waveforms at respect points of the timing recovering circuit shown in Fig. 1;
Fig. 3 is a block diagram of an embodiment of this invention ;
Fig. 4 is a block diagram of an example of an automatic slice circuit;
Figs. 5A to 5F show waveforms of outputs at respective points shown in Fig. 4;
Fig. 6 is a block diagram of a prior art timing recovering apparatus having a prior art automatic slice circuit; and
Figs. 7A to 7F show waveforms for explaining a prior art timing recovering apparatus;

The same or corresponding elements or parts are designated as like references throughout the drawings.

Hereinbelow will be described an explanatory example of this invention.

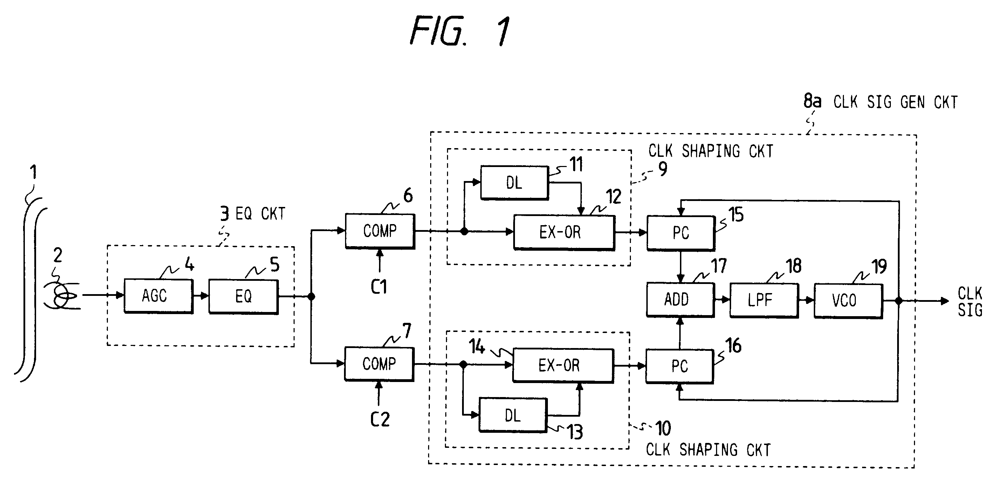

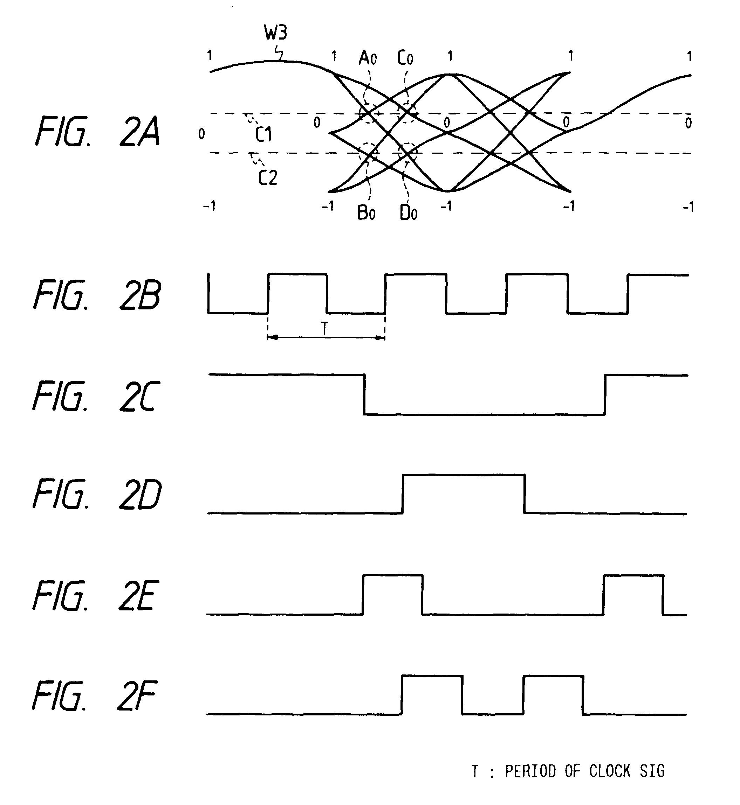

Fig. 1 is a block diagram of an explanatory example of this invention of timing recovering circuit. Figs. 2A to 2F shows waveforms at respect points of the timing recovering circuit shown in Fig. 1. A video signal and a sound signal is recorded on the magnetic recording medium 1 after a/d conversion and I-NRZI (interleaved nonreturn to zero inversion). A data signal reproduced from the magnetic recording medium 1 by a magnetic head 2 is applied to an equalizing circuit 3 comprising an AGC circuit 4 and equalizer 5. The reproduced data signal is input to the AGC circuit 4 for amplifying the reproduced data signal with automatic gain controlled. An output of the AGC circuit 4 is supplied to equalizer 5 for frequency-compensating the received data signal to produce a data signal having partial response waveform, PR (1, 0, -1). The equalized data signal shows three-valued eye pattern as shown in Fig. 2A.

The equalized data signal is compared by comparator 6 and 7. Comparators 6 and 7 are supplied with different reference levels C1 and C2 respectively as shown in Fig. 2A to discriminate the equalized data signal into three level ranges with their two binary outputs. The comparator 7 supplied with the reference level C2 outputs an inverted output such that a level of -1 is output as 1. The binary output of the comparator 6 is input to a clock shaping circuits 9 of a clock signal generation circuit 8a. The binary output of the comparator 7 is input to a clock shaping circuit 10. The clock shaping circuit 9 comprises an Exclusive-OR circuit 12 responsive to the binary output of the comparator 6 and a delay circuit 11 for delaying the binary output by a half of a period T of clock signal, i.e., (T/2), to supply the delayed binary signal to the another input of the Exclusive OR circuit 12.

The clock shaping circuit 10 has the same structure as the clock shaping circuit 9. That is, the clock shaping circuit 10 comprises an Exclusive-OR circuit 14 responsive to the binary output of the comparator 7 and delay circuit 13 for delaying the binary output by a half of a period T of clock signal, i.e., (T/2), to supply the delayed binary signal to the another input of the Exclusive OR circuit 13. The Exclusive OR circuit 12 effects Exclusive-OR operation between the binary output of the comparator 6 and the delayed binary output form the delayed circuit 11 in order to shaping of the binary output to enable phase comparing by the PLL (phase locked loop) circuit of the next stage. Similarly, the Exclusive OR circuit 14 effects Exclusive-OR operation between the binary output of the comparator 7 and the delayed binary output form the delay circuit 13.

An output of the clock shaping circuit 9 is applied to a phase comparator 15 for comparing the output of the clock shaping circuit 9 with an output of voltage controlled oscillator (VCO) 19, that is, the reproduced clock signal. An output of the clock shaping circuit 10 is applied to a phase comparator 16 for comparing the output of the clock shaping circuit 10 with the reproduced clock signal. An output of the phase comparator 15 is added to an output of the phase comparator 16 by an adder 17. An output of the adder is sent to the voltage controlled oscillator 19 through a low-pass filter 18 with high frequency component removed. That is, the phase comparators 15 and 16, the adder 17, the low-pass filter 18, and the voltage controlled oscillator 19 form a phase locked loop responsive to binary outputs from the comparators 6 and 7 for generating a clock signal whose timing recovered.

Hereinbelow will described operation of the timing recovering circuit of this explanatory example with reference to Figs. 2A to 2F.

Fig. 2A shows waveforms of the output of the equalizing circuit 3 in the form of eye pattern to be discriminated into three-valued notation, where "1" and "-1" denote amplitudes-at synchronized clock timings and references C1 and C2 denote the reference levels of the comparators 6 and 7 respectively. Figs. 2B to 2F show waveforms of outputs at respective points in the clock signal generation circuit 8 when the received data signal including data pattern shown by a waveform W3 represented by three-valued notation (1, 1, -1, 0). Therefore, the binary output of the comparator 6 shows an waveform shown in Fig. 2C and the binary output of the comparator 7 shows an waveform shown in Fig. 2D wherein the comparator 7 supplied with the reference level C2 outputs an inverted output such that a level of -1 is output as 1. The binary outputs of the comparators 6 and 7 are shaped by the clock shaping circuits 9 and 10 respectively. Therefore, the output of the clock shaping circuit 9 shows a waveform shown in Fig. 2E and the output of the clock shaping circuit 10 shows a waveform shown in Fig. 2F. There is a relation between the clock signal output from the voltage controlled oscillator 19 and the binary outputs of the comparators 6 and 7 is such that one edge of the binary signals of the comparators 6 and 7 corresponds to one period of the clock signal shown in Fig. 2B. Therefore, PLL control can be obtained from the output of the VCO 19. The phase comparators 15 and 16 comprise Exclusive OR circuits. The adder 17 adds the output of the phase comparator 15 to the output of the phase comparator 16 through analog processing. The added phase signal from the adder 17 is filtered by the low-pass filter 18. The VCO 19 oscillates in accordance with the output of the low-pass filter 18 and outputs the clock signal with timing of the received data signal recovered.

Because the equalizing circuit 3 effects frequency compensation to obtain partial response (1, 0, -1), both cross points A0 and D0 or both cross points B0 and C0 in the three-valued eye pattern always exist in any data pattern of the received data signal and phase difference between these cross points. Moreover, the clock signal is the same and if either cross point of a pair of cross points A0 and D0 of B0 and C0 shows lead, the other cross point of the pair shows lag of the same amount. Therefore, this phase relation is averaged by the adder 17 summing the outputs of the phase comparators 15 and 16.

More specifically, comparing the waveforms in Fig. 2B with Figs. 2E and 2F, phase difference between rising edges in Fig. 2B and rising edges in Fig. 2E agrees with that between rising edges in Fig. 2B and rising edges in Fig. 2F but polarities of these phase differences have an inverted relation. Therefore, the averaging of these phase differences provides accurate phase control to the phase locked loop, so that the VCO 19 generates the lock signal accurately.

Moreover, when the reproduced data signal from the magnetic head 2 varies in magnitude, cross points A0 and D0 or cross points B0 and C0 deviate because the reference levels C1 and C2 are constant in this timing recovering circuit. However, relations between the cross points A0 and D0 or B0 and C0 are constant, so that the averaging of phase differences detected by the phase comparators 15 and 16 removes the variation of magnitude of the reproduced data signal.

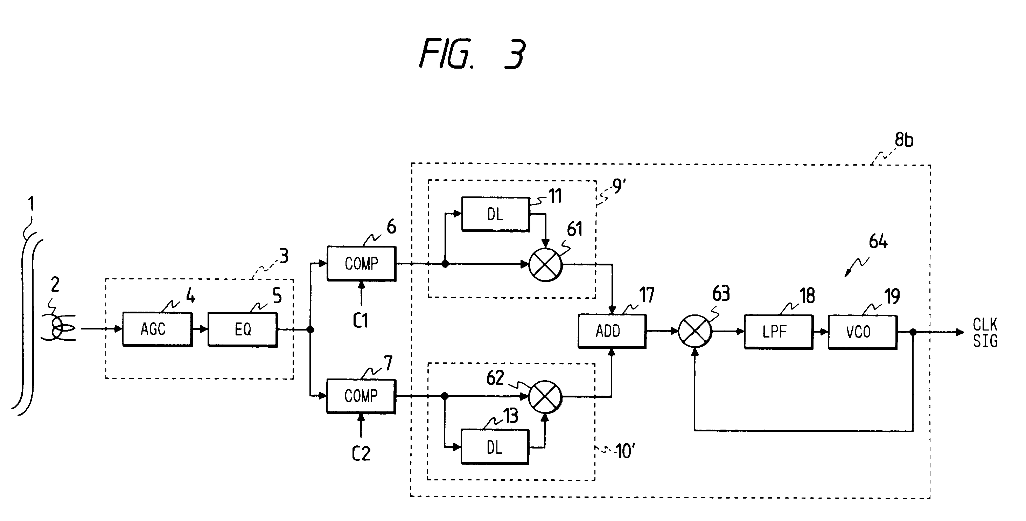

Fig. 3 is a block diagram of an embodiment of the invention. In the clock shaping circuits 9 and 10 of the embodiment, the binary output form the comparator 6 and 7 are shaped by the Exclusive OR circuit 12 and 14. However, in this modified embodiment, shaping is effected by analog multipliers 61 and 62 of clock shaping circuits 9' and 10'in a clock signal generation circuit 8b. The output of the analog multiplier 61 is add to the output of the analog multiplier 62 linearly by the adder 17. Feedback of a PLL circuit 64 is executed by an analog multiplier 63 for multiplying the output of the adder 17 with the output of the VCO 19 to form phase locked loop. This structure also provides the same function as that of the explanatory example.

Hereinbelow will be described an automatic slice apparatus with reference to drawings.

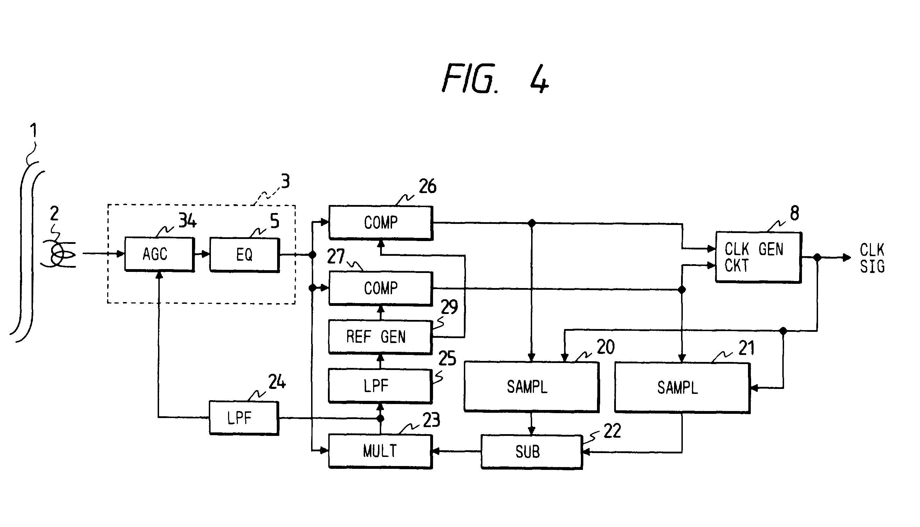

Fig. 4 is a block diagram of the example of an automatic slice circuit where the same elements are designated as the same references as Fig. 1.

A video signal and a sound signal is recorded on the magnetic recording medium 1 after a/d conversion and I-NRZI. A data signal reproduced from the magnetic recording medium 1 by a magnetic head 2 is an equalizing circuit 3 comprising an AGC circuit 34 and equalizer 5. The reproduced data signal is inputted to the AGC circuit 34 for amplifying the reproduced data signal with automatic gain controlled. An output of the AGC circuit 34 is supplied to equalizer 5 for frequency-compensating the received data signal to produce a data signal having partial response waveform, PR (1, 0, -1). The equalized data signal shows three-valued eye pattern.

The equalized data signal is compared by comparators 26 and 27. The comparators 26 and 27 discriminate the equalized data signal into three level ranges with their two binary outputs. The comparator 7 outputs an inverted output such that a level of -1 is output as 1. The binary outputs of the comparing circuits 6 and 7 are input to a clock signal generation circuit 8 which correspond to or the same as the clock signal generation circuit 8a or 8b described in the explanatory example. The clock signal generation circuit 8 outputs a clock signal with timing of the received data signal recovered.

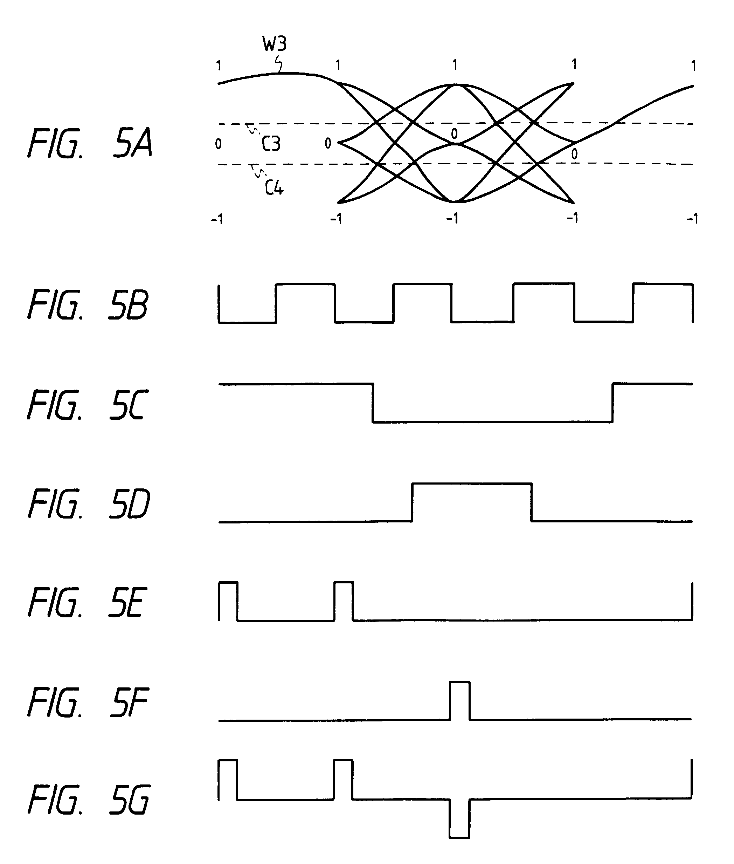

Data sampling circuit 20 samples the binary signal from the comparator 26 in response to the clock signal from the clock signal generation circuit 8. Data sampling circuit 21 samples the binary signal from the comparator 7 in response to the clock signal from the clock signal generation circuit 8. Figs. 5A to 5F show waveforms of outputs at respective points of this embodiment when the received data signal including data pattern shown by a waveform W3 represented by three-valued notation (1, 1, -1, 0). Therefore, the binary output of the comparator 26 shows an waveform shown in Fig. 5C when the comparator 26 compares the output of the equalizing circuit 3 with the reference level C3. The binary output of the comparator 27 shows.an waveform shown in Fig. 5D when the comparing circuit 27 is supplied with the reference level C4. The comparator 27 outputs an inverted output such that a level of -1 is output as 1. The data sampling circuits 20 and 21 sample the binary outputs of the comparators 26 and 27 at rising edges of the clock signal shown in Fig. 5B, so that they output signals showing waveforms shown in Figs. 2E and 2F respectively. Outputs of the data sampling circuits 20 and 21 are sent to a subtractor 22 for subtracting the output of the data sampling circuit 20 from the output of the data sampling circuit 21 as shown in Fig. 5G. A waveform of Fig. 2G is indicative of both bit synchronizing timing and polarity of three-valued data signal shown in Fig. 2A.

An output of the subtractor 22 is sent to a multiplier 23. The multiplier 23 multiplies the output of the subtractor 22 by the output of the equalizing circuit 3. Therefore, the multiplier 23 detects level of the reproduced data signal at the bit synchronizing timing. This means that the level of the reproduced data signal is constant irrespective of data pattern of the reproduce data signal because the output of the equalizing circuit having partial response (1, 0, -1) except that the level of the reproduced data signal varies. In other words, the multiplier 23 can detect variation in amplitude of the reproduced data signal accurately.

A low-pass filter 24 extracts amplitude variation components from the output of the multiplier 23. An output of the low-pass filter 24 is sent to the AGC circuit 34 to compensate the amplitude of the received data signal by feedback control. Therefore, the variation of the reproduced data signal is largely compensated and remaining variation is detected by the low-pass filters 24 and 25. Therefore, the low-pass filter 25 detects the remaining variation. The detected variation is fed to a reference signal generation circuit 29 for generating the reference level C3 and C4 in accordance with the detected variation, that is, the output to the low-pass filter 25. The reference levels C3 and C4 controlled by the detected variation are sent to the comparators 26 and 27 respectively. The comparator 26 compares the output of the equalizing circuit 3 with the reference level C3. The comparator 27 compares the output of the equalizing circuit 3 with the reference level C4. This compensation of the variation of the data signal is feedfoward control.

Therefore, the this control can respond the variation quickly, so that the remaining variation in the amplitude of the data signal can be compensated considerably.

Moreover, a large part of variation in amplitude of the data signal is compensated by the AGC 34, so that it is not necessary to assign a large dynamic range to the reference levels C3 and C4 of the comparators 26 and 27 and thus, this cause the comparators 26 and 27 to withstand external noises.

Moreover, the clock generation circuit 8 can generate the clock signal indicative of bit synchronizing without affection of the variation of amplitude of the data signal. Therefore, the clock generation circuit 8 and the automatic slice circuit can be treated as independent loop.

Further, in Fig. 4, the low-pass filter 24 and 25 are provided separately. However, only one low-pass filter can provide the detection of variation in amplitude of the data signal.

A timing recovering apparatus comprises an equalizer for equalizing a digital data signal subjected to interleaved NRZI such that the digital data signal has partial response (1, 0, -1), two comparators for comparing the equalized data signal with two different reference levels, two phase comparing portions for detecting phase difference between the outputs of the comparators and a reproduced clock signal separately, an adder for summing the outputs of the phase comparators, and a VCO for generating the reproduce clock signal in accordance with the output of the adder. This timing recovering apparatus performs phase comparing with two different phase comparators and PLL control is performed sum of the output of the two different phase comparators, so that the clock signal is not affected by data pattern of the data signal. An automatic slice apparatus comprises the equalizer for equalizing a digital data signal subjected to interleaved NRZI, and two comparators supplied with reference levels, and the timing recovering apparatus, detects amplitude of the output of the equalizer in response to the reproduced clock signal to compensate the reference levels.

## Claims

1. A timing recovering apparatus comprising:
equalizing means (5) for equalizing a digital data signal such that said digital data signal has partial response (1, 0, -1);
first and second comparing means (6, 7) for comparing an output of said equalizing means (5) with first and second reference levels, respectively, said first and second reference levels being different from each other;
low pass filter means (18); and
oscillation means (19) for generating a reproduced clock signal with frequency thereof controlled in accordance with an output of said low-pass filter means (18),
**characterized by**
first and second clock signal shaping means (9', 10') for shaping outputs of said first and second comparing means (6, 7), respectively;
adding means (17) for linearly adding an output of said first clock signal shaping means (9') to an output of said second clock signal shaping means (10'); and
phase comparing means (63) comprising an analog multiplier for detecting phase difference between said reproduced clock signal and an output of said adding means (17), wherein an output of said phase comparing means (63) is filtered by said low-pass filter means (18).

2. A timing recovering apparatus as claimed in claim 1,
**characterized in that**
said first clock signal shaping means (9') comprises delay means (11) for delaying said output of said first comparing means (6) by half of a period of a clock signal of said data signal to be reproduced and an analog multiplier (61) for multiplying said output of said first comparing means (6) and an output of said delay means (11).

3. A timing recovering apparatus as claimed in claim 1,
**characterized in that**
said second clock signal shaping means (10') comprises delay means (13) for delaying said output of said second comparing means (7) by half of a period of a clock signal of said data signal to be reproduced and an analog multiplier (62) for multiplying said output of said second comparing means (7) and an output of said delay means (13).

4. A timing recovering apparatus as claimed in claim 1,
**characterized in that**
said first clock signal shaping means (9') comprises delay means (11) for delaying said output of said first comparing means (6) by half of a period of a clock signal of said data signal to be reproduced and Exclusive-OR operation means (12) for Exclusive-OR operating between said output of said first comparing means (6) and an output of said delay means (11).

5. A timing recovering apparatus as claimed in claim 1,
**characterized in that**
said second clock signal shaping means (10') comprises delay means (13) for delaying said output of said second comparing means (7) by half of a period of a clock signal of said data signal to be reproduced and Exclusive-OR operation means (14) for Exclusive-OR operating between said output of said second comparing means (7) and an output of said delay means (13).

## Patentansprüche

1. Taktwiedergewinnungsvorrichtung mit
einer Abgleicheinrichtung (5) zum Abgleich eines digitalen Datensignals derart, daß das digitale Datensignal eine Teilantwort (1, 0, -1) aufweist,
einer ersten und zweiten Vergleichseinrichtung (6, 7) zum jeweiligen Vergleich einer Ausgabe der Abgleicheinrichtung (5) mit einem ersten und zweiten Referenzpegel, wobei der erste und zweite Referenzpegel voneinander verschieden sind,
einer Tiefpaßfiltereinrichtung (18) und
einer Oszillationseinrichtung (19) zur Erzeugung eines wiederhergestellten Taktsignals, wobei dessen Frequenz in Übereinstimmung mit einer Ausgabe der Tiefpaßfiltereinrichtung (18) gesteuert wird,
**gekennzeichnet durch**
eine erste und zweite Taktsignalformeinrichtung (9', 10') zur Formung jeweiliger Ausgaben der ersten und zweiten Vergleichseinrichtung (6, 7),
eine Addiereinrichtung (17) zur linearen Addition einer Ausgabe der ersten Taktsignalformeinrichtung (9') mit einer Ausgabe der zweiten Taktsignalformeinrichtung (10'), und
eine Phasenvergleichseinrichtung (63) mit einer analogen Multipliziereinrichtung zur Erfassung einer Phasendifferenz zwischen dem wiederhergestelltem Taktsignal und einer Ausgabe der Addiereinrichtung (17), wobei eine Ausgabe der Phasenvergleichseinrichtung (63) durch die Tiefpaßfiltereinrichtung (18) gefiltert wird.

2. Taktwiedergewinnungsvorrichtung nach Anspruch 1,
**dadurch gekennzeichnet, daß**
die erste Taktsignalformeinrichtung (9') eine Verzögerungseinrichtung (11) zur Verzögerung der Ausgabe der ersten Vergleichsinrichtung (6) um eine halbe Periode eines Taktsignals des wiederherzustellenden Datensignals und eine analoge Multipliziereinrichtung (61) zur Multiplikation der Ausgabe der ersten Vergleichseinrichtung (6) mit einer Ausgabe der Verzögerungseinrichtung (11) aufweist.

3. Taktwiedergewinnungsvorrichtung nach Anspruch 1,
**dadurch gekennzeichnet, daß**
die zweite Taktsignalformeinrichtung (10') eine Verzögerungseinrichtung (13) zur Verzögerung der Ausgabe der zweiten Vergleichseinrichtung (7) um eine halbe Periode eines Taktsignals des wiederherzustellenden Datensignals und eine analoge Multipliziereinrichtung (62) zur Multiplikation der Ausgabe der zweiten Vergleichseinrichtung (7) mit einer Ausgabe der Verzögerungseinrichtung (13) aufweist.

4. Taktwiedergewinnungsvorrichtung nach Anspruch 1,
**dadurch gekennzeichnet, daß**
die erste Taktsignalformeinrichtung (9') eine Verzögerungseinrichtung (11) zur Verzögerung der Ausgabe der ersten Vergleichseinrichtung (6) um eine halbe Periode eines Taktsignals des wiederherzustellenden Datensignals und eine Exklusiv-ODER-Verknüpfungseinrichtung (12) zur Exklusiv-ODER-Verknüpfung der Ausgabe der ersten Vergleichseinrichtung (6) und einer Ausgabe der Verzögerungseinrichtung (11) aufweist.

5. Taktwiedergewinnungsvorrichtung nach Anspruch 1,
**dadurch gekennzeichnet, daß**
die zweite Taktsignalformeinrichtung (10') eine Verzögerungseinrichtung (13) zur Verzögerung der Ausgabe der zweiten Vergleichseinrichtung (7) um eine halbe Periode eines Taktsignals des wiederherzustellenden Datensignals und eine Exklusiv-ODER-Verknüpfungseinrichtung (14) zur Exklusiv-ODER-Verknüpfung zwischen der Ausgabe der zweiten Vergleichseinrichtung (7) und einer Ausgabe der Verzögerungseirichtung (13) aufweist.

## Revendications

1. Dispositif de récupération d'horloge comprenant :
un moyen d'égalisation (5) destiné à égaliser un signal de données numérique de telle sorte que ledit signal de données numérique présente une réponse partielle (1, 0, -1),
des premier et second moyens de comparaison (6, 7) destinés à comparer une sortie dudit moyen d'égalisation (5) à des premier et second niveaux de référence, respectivement, lesdits premier et second niveaux de référence étant différents l'un de l'autre,
un moyen de filtre passe-bas (18), et
un moyen d'oscillation (19) destiné à générer un signal d'horloge reproduit, la fréquence de celui-ci étant commandée conformément à une sortie dudit moyen de filtre passe-bas (18),
caractérisé par
des premier et second moyens de mise en forme de signal d'horloge (9', 10') destinés à mettre en forme les sorties desdits premier et second moyens de comparaison (6, 7), respectivement,
un moyen d'addition (17) destiné à additionner de façon linéaire une sortie dudit premier moyen de mise en forme de signal d'horloge (9') à une sortie dudit second moyen de mise en forme de signal d'horloge (10'), et
un moyen de comparaison de phase (63) comprenant un multiplicateur analogique destiné à détecter une différence de phase entre ledit signal d'horloge reproduit et une sortie dudit moyen d'addition (17), dans lequel une sortie dudit moyen de comparaison de phase (63) est filtrée par ledit moyen de filtre passe-bas (18).

2. Dispositif de récupération d'horloge selon la revendication 1, caractérisé en ce que
ledit premier moyen de mise en forme de signal d'horloge (9') comprend un moyen à retard (11) destiné à retarder ladite sortie dudit premier moyen de comparaison (6) d'une demi-période d'un signal d'horloge dudit signal de données devant être reproduit et un multiplicateur analogique (61) destiné à multiplier ladite sortie dudit premier moyen de comparaison (6) et une sortie dudit moyen à retard (11).

3. Dispositif de récupération d'horloge selon la revendication 1,
caractérisé en ce que
ledit second moyen de mise en forme de signal d'horloge (10') comprend un moyen à retard (13) destiné à retarder ladite sortie dudit second moyen de comparaison (7) d'une demi-période d'un signal d'horloge dudit signal de données devant être reproduit et un multiplicateur analogique (62) destiné à multiplier ladite sortie dudit second moyen de comparaison (7) et une sortie dudit moyen à retard (13).

4. Dispositif de récupération d'horloge selon la revendication 1,
caractérisé en ce que
ledit premier moyen de mise en forme de signal d'horloge (9') comprend un moyen à retard (11) destiné à retarder ladite sortie dudit premier moyen de comparaison (6) d'une demi-période de signal d'horloge dudit signal de données devant être reproduit et un moyen d'opération OU exclusif (12) destiné à exécuter une opération OU exclusif entre ladite sortie dudit premier moyen de comparaison (6) et une sortie dudit moyen à retard (11).

5. Dispositif de récupération d'horloge selon la revendication 1,
caractérisé en ce que
ledit second moyen de mise en forme de signal d'horloge (10') comprend un moyen à retard (13) destiné à retarder ladite sortie dudit second moyen de comparaison (7) d'une demi-période de signal d'horloge dudit signal de données devant être reproduit et un moyen d'opération OU exclusif (14) destiné à appliquer une opération OU exclusif entre ladite sortie dudit second moyen de comparaison (7) et une sortie dudit moyen à retard (13).
